# EUROPÄISCHE PATENTSCHRIFT

(11) **EP 2 268 580 B1**
(45) Veröffentlichungstag und Bekanntmachung des Hinweises auf die Patenterteilung: **17.05.2017**
(21) Anmeldenummer: 09734245.5
(22) Anmeldetag: 08.04.2009
(51) Int. Cl.: C01G 9/02, C08C 1/04, C08K 3/22, C09C 3/00, C09C 3/12, C09D 5/00

(54) **REAKTIV OBERFLÄCHENMODIFIZIERTE PARTIKEL**
REACTIVE SURFACE MODIFIED NANOPARTICLE
NANOPARTICULE A SURFACE MODIFIEE RÉACTIF

(30) Priorität: 23.04.2008 DE 102008020440
(43) Veröffentlichungstag der Anmeldung: 05.01.2011
(73) Patentinhaber: Merck Patent GmbH, 64293 Darmstadt (DE)
(72) Erfinder: KOCH, Matthias, 65207 Wiesbaden (DE); PRADELLA, Jens, 64285 Darmstadt (DE)
(86) Internationale Anmeldenummer: PCT/EP2009/002594
(87) Internationale Veröffentlichungsnummer: WO 2009/129932

(56) Entgegenhaltungen:
- EP-A1- 2 058 349
- WO-A1-2007/059841
- WO-A1-2007/059842
- WO-A1-2008/101581
- US-A1- 2003 013 369

## Beschreibung

Die Erfindung betrifft Partikel, die mit einer inertisierten reaktiven Gruppe, d.h. mit reversibel blockierten speziellen Isocyanatgruppen funktionalisiert sind und deren Inertisierung durch einen äußeren Einfluss aufgehoben werden kann.

Zum Schutz von Oberflächen vor Korrosion, zur Verschleißminderung und zur Vermeidung des Fressens bei tribologisch hochbelasteten Reibpartnern kommen polymere Beschichtungen in Form von Lacken und Kunststoffschichten zum Einsatz. Je nach Anwendung enthalten diese reibungsmindernde Zusätze. Die Lebensdauer derartiger Beschichtungen ist bei tribologischer Belastung durch den Abrieb der Schicht begrenzt.

Aus dem Europäischen Patent EP-B-0 124 955 ist die Verwendung von Mischungen aus Polyolefinen mit Polytetrafluorethylen zur Steuerung der Reibungs- und Verschleißeigenschaften einer polymeren Matrix bekannt. Der Reibungskoeffizient der Polymermatrix wird durch den Zusatz erniedrigt. Es hat sich jedoch gezeigt, dass Festigkeit und Härte und damit die Haltbarkeit unter Belastung, derartiger Polytetrafluorethylen-Komposite deutlich schlechter sind als die der ungefüllten Materialien.

In DE 101 60 329 ist die Verstärkung von Polyolefinen mittels Silicapartikeln beschrieben. Diese sind über Verschlaufungen in die Polymermatrix eingebunden und können durch scherende Belastung aus dem Matrixverbund herausgerissen werden.

DE 10 2004 033 968 beschreibt die Beimengung harter partikulärer, insbesondere nanopartikulärer Materialen zu Polybenzophenylen und ähnlichen Verbindungen zur Verbesserung der Abriebbeständigkeit. Bei bestimmten Einsatzgebieten (zum Beispiel bei hohen Flächenpressungen) kann es jedoch zum Ausbrechen der Partikel aus der Matrix kommen, was zu erhöhtem Verschleiß gegenüber ungefüllten Materialien führt.

Es hat sich gezeigt, dass in tribologisch beanspruchten Systemen eine kovalente Einbindung der verstärkenden Partikel in die Matrix notwendig ist. Die Festigkeit des Kompositmaterials und die abriebmindernde Wirkung der Partikel können dadurch weiter verstärkt werden.

Die Aufgabe der vorliegenden Erfindung ist daher die Bereitstellung von agglomeratfreien, oberflächenfunktionalisierten Partikeln, die homogen eingemischt in eine Polymermatrix eine kovalente Bindung eingehen.

Die Aufgabe wird gelöst durch reversibel blockierte spezielle Isocyanatgruppen aufweisende Metalloxidpartikel.

Ein erster Gegenstand der Erfindung sind daher reversibel blockierte Isocyanatgruppen aufweisende Metalloxidpartikel in Dispersion, erhältlich durch Reaktion einer Dispersion der Metalloxidpartikel mit Silanen der Formel 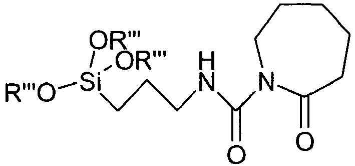 wobei
R"' jeweils unabhängig voneinander eine lineare oder verzweigte Alkylgruppe mit 1-8 C-Atomen bedeutet.

Ähnliche Silane als Oberflächenmodifikatoren sind aus EP 0872500 bekannt.

Die Partikel der vorliegenden Erfindung haben einen mittleren Teilchendurchmesser (d50) von bis zu 500nm, bevorzugt von 1 bis 200nm, besonders bevorzugt von 1 bis 80nm.

Die reversible Blockierung der Metalloxidpartikel ist wesentlich, um eine Lagerstabilität und Verarbeitungsfähigkeit in der gewünschten Polymermatrix, d.h. in Polymeren oder Bindemitteln von Lacken zu gewährleisten. Die Blockierung wird erfindungsgemäß durch einen äußeren Einfluss, bevorzugt Wärme oder Strahlung, nach Applikation der Polymermatrix oder der gesamten Lackzusammensetzung, die die reversibel blockierten Metalloxidpartikel enthalten, aufgehoben. Dies erlaubt die Reaktion der Partikel mit dem Polymer der Matrix oder dem Bindemittel des Lacksystems, wodurch ein Netzwerk mit kovalenten chemischen Bindungen entsteht.

Zusätzlich zu den Silanen der Formel 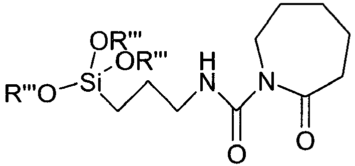 werden vorzugsweise amphiphile Silane zur Oberflächenfunktionalisierung verwendet, wie nachfolgend beschrieben.

Ferner bevorzugt ist ein Verfahren zur Herstellung von Metalloxidpartikeln mit reversibel blockierten Isocyanatgruppen in Dispersion, durch Reaktion einer Dispersion der Metalloxidpartikel mit Silanen der Formel 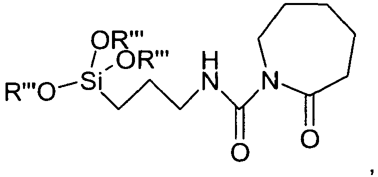 wobei
R'" jeweils unabhängig voneinander eine lineare oder verzweigte Alkylgruppe mit 1-8 C-Atomen bedeutet.

Eine lineare oder verzweigte Alkylgruppe mit 1 bis 8 C-Atomen ist beispielsweise Methyl, Ethyl, Isopropyl, tert-Butyl, n-Butyl, n-Pentyl, n-Hexyl, n-Heptyl, n-Octyl oder Ethylhexyl. Besonders bevorzugt ist R'" Methyl oder Ethyl.

Bevorzugt wird in dem erfindungsgemäßen Verfahren eine alkoholische oder wässrige Dispersion der Metalloxidpartikel eingesetzt. Besonders bevorzugt ist eine alkoholische Dispersion, die gegebenenfalls auch Wasser enthalten kann.
Bevorzugte Alkohole sind Methanol, Ethanol, Propanol, Isopropanol oder n-Butanol. Besonders bevorzugt wird Ethanol verwendet.

In der Regel entstehen Dispersionen der reversibel blockierten Isocyanatgruppen aufweisenden Metalloxidpartikel nach dem zuvor beschriebenen Verfahren. Zur Einarbeitung in besondere Lacksysteme oder deren Polymermatrix kann es wesentlich sein, isolierte Nanopartikel zu verwenden.
Isolierte reversibel blockierte Isocyanatgruppen aufweisende Metalloxidpartikel können erhalten werden, wenn in dem erfindungsgemäßen Verfahren wie zuvor beschrieben oder in den Ansprüchen festgelegt, das Lösungsmittel zur Trocknung entfernt wird.

Ein Gegenstand der Erfindung sind daher auch isolierte Metalloxidpartikel mit reversibel blockierten Isocyanatgruppen, wie zuvor beschrieben, dadurch gekennzeichnet, dass sie erhältlich sind durch die oben angegebene Umsetzung, wobei in einem letzten Schritt das Lösungsmittel der Dispersion zur Trocknung entfernt wird.

Ein Austausch des Lösungsmittels der Dispersion enthaltend die erfindungsgemäßen Metalloxidpartikel ist ebenfalls möglich. Die Vorgehensweise diesbezüglich ist dem Fachmann bekannt. Eine Möglichkeit ist in dem nachfolgenden Beispiel 4a beschrieben, wobei in Beispiel 4a das Lösemittel der Dispersion von Beispiel 3 gegen N-Methylpyrrolidon (NMP) ausgetauscht wird. Durch diese Möglichkeit kann eine Dispersion in jedem gewünschten Lösungsmittel hergestellt werden, die für das gewünschte Anwendungssystem oder auch Lacksystem benötigt wird oder geeignet sind.

Typische Lacklösemittel sind beispielsweise Alkohole, wie Methanol oder Ethanol, Ether, wie Diethylether, Tetrahydrofuran und/oder Dioxan, Ester wie Butylacetat oder Kohlenwasserstoffe, wie Toluol, Petrolether, halogenierte Kohlenwasserstoffe, wie Dichlormethan, oder auch kommerziell erhältliche Produkte wie Solvent Naphta oder Produkte basierend auf Shellsol, einem hochsiedenden Kohlenwasserstofflösemittel, beispielsweise Shellsol A, Shellsol T, Shellsol D40 oder Shellsol D70. Für bestimmte Lacksysteme sind typische Lösemittel Dimethylformamid (DMF) und/oder Alkylpyrrolidon, beispielsweise N-Methylpyrrolidon (NMP).

Vorteile der erfindungsgemäßen oberflächenmodifizierten Metalloxidpartikel sind
a) die Partikel können sich homogen und agglomeratfrei in der Polymermatrix, d.h. in einem Polymer oder synonym in einem Lackbindemittel verteilen,
b) die Partikel sind lagerfähig, da im Lagerzustand die reaktive Isocyanatgruppe reversibel blockiert vorliegt und kann bei Verarbeitung auf Wunsch über einen äußeren Einfluss aktiviert werden,
c) die Partikel erhöhen signifikant die Abriebfestigkeit von Lacken,
d) die Partikel verbessern die mechanischen Eigenschaften von thermisch härtenden Harzen, sogenannten Duroplasten, vorzugsweise von Epoxidharzen.

Insbesondere im Vergleich zu Metalloxidpartikeln, die mit den aus EP 0872500 bekannten Silanen zur Oberflächenmodifizierung funktionalisiert sind, haben die erfindungsgemäßen Metalloxidpartikel den besonderen Vorteil für die Einarbeitbarkeit in besonders thermisch zu belastende Systeme geeignet zu sein. Die erfindungsgemäß verwendete reversibel blockierte Isocyanatgruppe ist bei Temperaturen von 20 bis 180°C stabil und kann ab Temperaturen von 180°C reversibel deblockiert werden. Durch die höhere Deblockierungstemperatur bestehen Verarbeitungsvorteile, insbesondere bei der Synthese der Partikel. So besteht bei destillativen Entfernen der Lösemittel weniger die Gefahr des unerwünschten vorzeitigen Deblockierens. Der bevorzugte Bereich für die thermische Härtung oder Deblockierung liegt zwischen 190° und 240°C.

Im Sinne der vorliegenden Erfindung ist der Begriff Polymermatrix definiert als eine polymere Verbindung oder eine Mischung polymerer Verbindungen, welche reaktive Gruppen aufweist, die mit Isocyanaten reagieren können. Geeignete polymere Verbindungen tragen daher beispielsweise die reaktiven Gruppen ausgewählt aus -OH, -NHR (mit R= organischer Rest oder H). Die polymeren Verbindungen sind daher bevorzugt Polyesterpolyole, Polyacrylatpolyole, Polyamide, Polyamid-imide oder Epoxidharze. Besonders bevorzugt werden Polyamide, Polyamidimidie oder Epoxyidharze als Polymermatrix ausgewählt.
Die als bevorzugt oder besonders bevorzugt beschriebenen polymeren Verbindungen sind beispielsweise bekannte Lackbindemittel.

Organische Reste R sind beispielsweise lineare oder verzweigte Alkylgruppen mit 1 bis 20 C-Atomen, Cycloalkylgruppen mit 3 bis 10 C-Atomen oder Arylgruppen.

Bevorzugte lineare oder verzweigte Alkylgruppen sind beispielsweise Methyl, Ethyl, n-Propyl, Isopropyl, n-Butyl, Isobutyl, tert-Butyl, n-Pentyl oder n-Hexyl.
Bevorzugte Cycloalkylgruppen sind beispielsweise Cyclopropyl, Cyclobutyl, Cyclopentyl oder Cyclohexyl.
Arylgruppen sind bevorzugt Phenyl oder Naphthyl.

Das Partikelmaterial basiert besonders bevorzugt auf Oxiden bzw. Hydroxiden von Silicium, Titan, Zink, Aluminium, Cer, Cobalt, Chrom, Nickel, Eisen, Yttrium und/oder Zirkonium, die optional mit Oxiden bzw. Hydroxiden von Silicium oder Aluminium beschichtet sein können. Die erfindungsgemäßen Metalloxidpartikel bestehen daher bevorzugt aus Oxiden bzw. Hydroxiden von Silicium, Titan, Zink, Aluminium, Cer, Cobalt, Chrom, Nickel, Eisen, Yttrium und/oder Zirkonium, die optional mit Oxiden bzw. Hydroxiden von Silicium beschichtet sein können. Besonders bevorzugte Metalloxidpartikel sind nachfolgend aufgeführt.

In den erfindungsgemäßen Metalloxid-Partikeln bedeutet Metall alle Elemente, die im Vergleich zu den Gegenionen als elektropositiver Partner auftreten können, wie die klassischen Metalle der Nebengruppen beziehungsweise die Hauptgruppenmetalle der ersten und zweiten Hauptgruppe genauso jedoch auch alle Elemente der dritten Hauptgruppe sowie Silicium, Germanium, Zinn, Blei, Phosphor, Arsen, Antimon und Bismuth. Zu den bevorzugten Metalloxiden gehören insbesondere Titan-, Zink-, Zirkon-, Cer- oder Siliciumdioxid. Ganz besonders bevorzugt werden als Metalloxidpartikel Siliciumdioxidpartikel verwendet.

Die Metalloxid-Partikel werden der Polymermatrix, wie zuvor definiert, üblicherweise in Bereichen von 0,1 - 25 Gew.-%, insbesondere 0,5 - 15 Gew.-% und insbesondere bevorzugt 1 - 5 Gew.-% bezogen auf den Gesamtfeststoffgehalt der Polymermatrix beigemischt.

Für die Verwendung der Metalloxid-Partikel im Sinne der vorliegenden Erfindung hat es sich insbesondere im Hinblick auf die Abriebeigenschaften als vorteilhaft erwiesen, wenn die Partikel rund sind und keine Kanten aufweisen; d.h. im Sinne der vorliegenden Erfindung, dass die Verhältnisse der drei aufeinander senkrecht stehenden mittleren Durchmesser der Partikel im Bereich 1:2 bis 2:1 und vorzugsweise im Bereich 1,5:1 - 1:1,5 liegen.
Durchmesser und Form werden mittels elektronenmikroskopischer Aufnahmen (REM, TEM) bestimmt.

Weiter ist es vorteilhaft, wenn die Partikel nicht porös sind; d.h. die Oberfläche der Partikel im wesentlichen von deren äußerer Oberfläche gebildet wird.

Darüber hinaus ist es im Sinne der Abriebeigenschaften und der Verarbeitbarkeit vorteilhaft, wenn die Metalloxid-Partikel eine Teilchengrößenverteilung aufweisen bei der die Anteile von Partikeln mit einem mittleren Teilchendurchmesser oberhalb von 500 nm unter 0,5 Gew.-% liegen, wobei vorzugsweise die Anteile von Partikeln mit einem mittleren Teilchendurchmesser oberhalb von 200 nm unter 0,5 Gew.-% liegen und insbesondere bevorzugt die Anteile von Partikeln mit einem Teilchendurchmesser oberhalb von 80 nm unter 0,5 Gew.-% liegen.
Der mittlere Teilchendurchmesser wird mittels Partikelkorrelationsspektroskopie (PCS) oder mittels Transmisionselektronenmikroskop bestimmt.

Bei der PCS-Methode wird die Untersuchung mit einem Malvern Zetasizer nach Bedienungsanleitung durchgeführt. Dabei wird der Durchmesser der Partikel, als d50Wert, bestimmt. Die Bezeichnung "mittlerer Teilchendurchmesser" in der vorliegenden Beschreibung bezieht sich auf diesen d50-Wert.

Als Metalloxid-Partikel werden in einer Variante der vorliegenden Erfindung bevorzugt monodisperse Kerne aus Siliciumdioxid eingesetzt, die beispielsweise nach dem in US 4 911 903 beschriebenen Verfahren erhalten werden können. Die Kerne werden dabei durch hydrolytische Polykondensation von Tetraalkoxysilanen in einem wäßrigammoniakalischen Medium hergestellt, wobei man zunächst ein Sol von Primärteilchen erzeugt und anschließend durch ein kontinuierliches, kontrolliertes Zudosieren von Tetraalkoxysilan die erhaltenen SiO₂-Partikel auf die gewünschte Teilchengröße bringt. Mit diesem Verfahren sind monodisperse SiO₂-Kerne mit einer Standardabweichung der mittleren Teilchendurchmesser von 5 % herstellbar.

Weiterhin sind als Ausgangsmaterial SiO₂-Kerne bevorzugt, die mit Halbmetallen, Metallen oder Metalloxiden, wie z.B. TiO₂, ZrO₂, ZnO₂, SnO₂ oder Al₂O₃, beschichtet sind. Die Herstellung von mit Metalloxiden beschichteter SiO₂-Kerne ist beispielsweise in US 5 846 310, DE 198 42 134 und DE 199 29 109 näher beschrieben.

Als Ausgangsmaterial sind auch einsetzbar monodisperse Kerne aus Metalloxiden wie TiO₂, ZrO₂, ZnO₂, SnO₂ oder Al₂O₃ oder Metalloxidgemischen. Ihre Herstellung ist beispielsweise in EP 0 644 914 beschrieben. Weiterhin ist das Verfahren gemäß EP 0 216 278 zur Herstellung monodisperser SiO₂-Kerne ohne weiteres und mit gleichem Ergebnis auf andere Oxide übertragbar. Zu einem Gemisch aus Alkohol, Wasser und Ammoniak, dessen Temperatur mit einem Thermostaten auf 30 bis 40 °C genau eingestellt wird, werden unter intensiver Durchmischung Tetraethoxysilan, Tetrabutoxytitan, Tetrapropoxyzirkon oder deren Gemische in einem Guss zugegeben und die erhaltene Mischung für weitere 20 Sekunden intensiv gerührt, wobei sich eine Suspension von monodispersen Kernen im Nanometerbereich ausbildet. Nach einer Nachreaktionszeit von 1 bis 2 Stunden werden die Kerne auf die übliche Weise, z.B. durch Zentrifugieren, abgetrennt, gewaschen und getrocknet.

Der Oberflächenfunktionalisierungsgrad mit Silanen der Formel 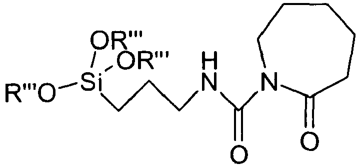 ist 0,1 bis 3 Moleküle/nm², bevorzugt werden 0,2 bis 2 Moleküle/nm² aufgebracht.

Die zusätzliche Oberflächenfunktionalisierung neben der Funktionalsierung mit reversibel blockierten Isocyanatgruppen, wie zuvor beschrieben, besteht zu 1-80%, bevorzugt zu 1-50%, besonders bevorzugt zu 2-20% aus amphiphilen Silanen, wie sie in WO 2007/059842 beschrieben sind. Dadurch wird die Agglomeration der Partikel während des Funktionalisierungsprozesses, ihrer Verarbeitung und beim Aufbringen der Schicht verhindert.

Bevorzugt handelt es sich bei diesen Silanen um Verbindungen der allgemeinen Formel

X_{3-b}R_{b}Si-S_{P}-Aₕₚ-B_{hb}

wobei
- X abspaltbare organische Gruppe, bevorzugt einen Alkoxyrest OR'" mit einer linearen oder verzweigten Alkylgruppe R'" mit 1- 8 C-Atomen,
- S_{P} entweder O oder geradkettiges oder verzweigtes Alkyl mit 1-18 C-Atomen, geradkettiges oder verzweigtes Alkenyl mit 2-18 C-Atomen und einer oder mehreren Doppelbindungen, geradkettiges oder verzweigtes Alkinyl mit 2-18 C-Atomen und einer oder mehreren Dreifachbindungen, gesättigtes, teilweise oder vollständig ungesättigtes Cycloalkyl mit 3-7 C-Atomen, das mit Alkylgruppen mit 1-6 C-Atomen substituiert sein kann,
- Aₕₚ einen hydrophilen Block und
- B_{hb} einen hydrophoben Block bedeutet und
- wobei mindestens eine reaktive funktionelle Gruppe an Aₕₚ und/oder B_{hb} gebunden vorliegt.

Bevorzugte Silane zur zusätzlichen Oberflächenfunktionalisierung sind in WO 2007/059842 beschrieben, bevorzugt Silane der Strukturen 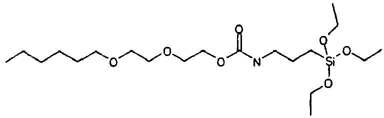 (3-Triethoxysilyl)-propylcarbamidsäure 2-(2-hexyloxy-ethoxy)-ethylester), 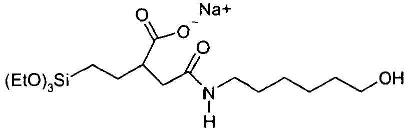 oder

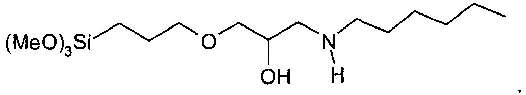

Weiterhin lassen sich als zusätzliche Oberflächenfunktionalisierungsmittel die kommerziell erhältlichen Silane Dynasylan® Glymo (3-Glycidyloxypropyltrimethoxysilan, Fa. Evonik) und Geniosil® GF20 (Triethoxysilylpropylbernsteinsäureanhydrid, Fa. Wacker, Deutschland) einsetzen

Bevorzugt ist auch die Verwendung der zuvor beschriebenen erfindungsgemäßen Partikel in einer Polymermatrix oder mit anderen Worten in einem Lack oder Harz.

Als Harz bezeichnet man duroplastische Polymere.

Die Polymermatrix ist vorzugsweise Bestandteil einer Lackformulierung. Die erfindungsgemäßen Partikel eignen sich insbesondere bevorzugt für thermisch härtende Lacke, basierend auf dem Polymer Polyamidimid (PAI). PAI enthalten in der Polymerkette sowohl Amid- als auch Imid-Funktionen. Typischerweise werden sie aus aromatischen Diaminen, bevorzugt 4,4'-Diaminodiphenylmethan) und Trimellitsäureanhydrid gebildet (DE10303635A1). Die Struktur der PAI und Ausführungsformen sind dem Fachmann wohlbekannt, beispielsweise durch James M. Margolis, editor in chief, Engineering plastics handbook , ISBN 0071457674 , McGraw-Hill, 2006.

Das Polymer der Polymermatrix, wie zuvor beschrieben ist vorzugsweise ein Polyamid, ein Polyamidimid oder ein Epoxid.

Die Polymermatrix enthält weiterhin vorzugsweise zusätzlich Festschmierstoffe.

Die Partikel können insbesondere in lössemittelbasierten Lacken, wässrigen Bindemitteldispersionen (Wasserlacke), wasserverdünnbaren Lacken oder Pulverlacken verwendet werden, wobei die genannten Lacke die polymeren Verbindungen, wie zuvor beschrieben als Matrix enthalten.

Wie zuvor ausgeführt, eignen sich Kompositmaterialien; d.h. Zusammensetzungen enthaltend die erfindungsgemäßen Metalloxidpartikel und mindestens eine polymere Verbindung als Matrix, wie zuvor definiert, als Werkstoffe und Beschichtungen zum Einsatz in Gleitpaaren, insbesondere Kugellagern, Wälzlagern, Gleitlagern, Gliederketten und Getriebezahnrädern sowie entsprechende Produkte.

Ein weiterer Gegenstand der Erfindung ist daher eine Zusammensetzung enthaltend die erfindungsgemäßen Metalloxidpartikel, wie zuvor beschrieben und mindestens eine polymere Verbindung als Matrix, wie zuvor oder als bevorzugt beschrieben.

Die Zusammensetzung kann bevorzugt zusätzlich Festschmierstoffe enthalten.

Insbesondere eignen sich die Kompositmaterialien für Gleitpaare bei denen mindestens ein Gleitpartner aus metallischen, polymeren und/oder keramischen Werkstoffen besteht, vorzugsweise beide Gleitpaare, wobei mindestens einer der Gleitpartner eine Beschichtung mit dem Kompositmaterial aufweist.
Gleitpaare zur technischen Verwendung können dabei alle bekannten Ausführungsformen annehmen. Bevorzugt sind hier zu nennen:
- Gleitlager,
- Wälzlager,
- Kugellager, wobei insbesondere bevorzugt die Hülse aus dem polymerbasierten Werkstoff bestehen kann,
- Gliederketten und
- Getriebezahnräder.

Der Verschleiß zwischen den Gleitpartnern kann durch die gleichzeitige Verwendung der erfindungsgemäßen Partikel sowie geeigneten Festschmierstoffen erreicht werden. Die Verwendung von Festschmierstoffen ist Stand der Technik, die Auswahl kann der Fachmann nach den Rahmenbedingungen der Anwendung treffen.

Demzufolge ist auch Gegenstand der Erfindung die Verwendung der erfindungsgemäßen Partikel in Gleitpaaren.
Bevorzugt ist bei den Gleitpaaren mindestens eine der Oberflächen metallisch.
Die folgenden Beispiele sollen die vorliegende Erfindung näher erläutern ohne sie einzuschränken.

### Beispiele:

### Partikelkorrelationsspektroskopie

Die Messungen werden mit einem Zetasizer Nano ZS der Fa. Malvern bei Raumtemperatur durchgeführt. Gemessen wird bei einer Laserwellenlänge von 532 nm.

Das Probenvolumen beträgt in allen Fällen 1ml bei einer Konzentration von 0,5 Gewichtsprozent Metalloxidpartikel in Butylacetat. Vor der Messung werden die Lösungen mit einem 0,45µm Filter filtriert.

### Transmissionselektronenmikroskopie

Es wird ein Tecnai 20F der Firma Fei Company mit Feldemissions-Kathode verwendet. Die Aufnahmen werden bei 200 kV Beschleunigungsspannung gemacht. Daten Aquisition auf einer 2k CCD Kamera von Gatan.

### Präparation der Flüssigproben mit Metalloxidpartikeln zur Vermessung im Transmissionselektronenmikroskop:

Zur Probenpräparation wird die Lösung enthaltend die Metalloxidpartikel auf 1 Gew.-% verdünnt und ein Tropfen dieser Lösung auf ein kohlebefilmtes Cu-Netzchen aufgetropft und gleich danach mit einem Filterpapier wieder "trockengesaugt". (blotting off excess solution). Die Messung der Probe erfolgt nach Trocknung bei Raumtemperatur für einen Tag.

### Beispiel 1: Herstellung des amphiphilen Silanes als Oberflächenmodifikator I

Unter Inertgasatmosphäre werden 4,00 ml Diethylenglycolmono-n-hexylether und 4,90 ml 3-Isocyanatopropyltriethoxysilan in 6,00 ml getrockneten Toluol zusammengegeben und 7 h auf 90 °C erhitzt. Der Reaktionsverlauf wird IR-spektroskopisch verfolgt. Nach Abschluss der Reaktion wird das Toluol am Rotationsverdampfer entfernt. (3-Triethoxysilyl)-propylcarbamidsäure 2-(2-hexyloxy-ethoxy)-ethyl ester.

### Beispiel 2: Herstellung des Oberflächenmodifikatiors II

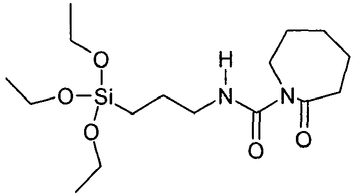

Unter Inertgasatmosphäre werden 28,29 g epsilon-Caprolactam und 61,84 g 3-Isocyanatopropyltriethoxysilan in 113,00 ml getrockneten Toluol zusammengegeben und 20 h auf 90 °C erhitzt. Der Reaktionsverlauf wird IR-spektroskopisch verfolgt. Nach Abschluss der Reaktion wird das Toluol am Rotationsverdampfer entfernt. Man erhält den Oberflächenmodifikator II = epsilon-Caprolactam-carboxy-(3-triethoxysilyl)propyl-amid.

### Beispiel 3: Herstellung der Partikeldispersion mit einem mittleren Teilchendurchmesser von 20nm

1200ml Ethanol, 612ml Wasser und 167ml TEOS (Tetraethoxysilan) werden vorgelegt und auf 75°C temperiert. Dazu werden 36ml wäßrige Ammoniak-Lösung (Konzentration 25%) rasch unter kräftigem Rühren zugeben. Die Mischung wird für 30s kräftig gerührt und dann ohne weiteres Rühren 1 h bei 75°C gehalten. Danach läßt man die Mischung langsam auf Raumtemperatur abkühlen. Zur Aufarbeitung wird die gesamte Mischung am Rotationsverdampfer auf eine Masse von 510 g eingeengt. Man erhält eine 10%ige Dispersion von Silicateilchen mit einem mittleren Teilchendurchmesser von 20nm.

### Beispiel 4a: Herstellung funktionalisierter Partikel mit reversibel blockierten reaktiven Gruppen

Zu 200 g der 10%igen Teilchendispersion aus Beispiel 3 kommen 1 g des Silans aus Beispiel 1 und 4 g des Silans aus Beispiel 2. Das Gemisch wird 24 h bei Raumtemperatur gerührt. Anschließend werden 80 g 1-Methyl-2-pyrrolidon (NMP) dazugegeben. Bei 30 °C wird das Wasser am Rotationsverdampfer entfernt.
Man erhält eine homogene Dispersion der Partikel in NMP.

### Vergleichsbeispiel 4b:

Herstellung funktionalisierter Partikel ohne reaktive Gruppen gemäß Beispiel 4a, wobei 5g des Silanes aus Beispiel 1 verwendet werden.

### Vergleichsbeispiel 4c:

Zu 200 g der 10%igen Teilchendispersion aus Beispiel 3 werden 80 g 1-Methyl-2-pyrrolidon gegeben und das Wasser bei reduziertem Druck und 30°C am Rotationsverdampfer entfernt. Die erhaltene, anfängliche klare Dispersion trübt sich im Laufe von 8 Tagen ein. Nach 12 Tagen hat sich ein Bodensatz aus agglomerierten Silicapartikeln gebildet. Diese Dispersion ist für Lackformulierungen nicht verwendbar.

### Beispiel 5a: Lackformulierung mit Nanopartikeln mit reversibel blockierten reaktiven Gruppen und Applikation

Zu 100g Molykote® 7409 der Firma Dow-Corning werden 28,5g der Partikeldispersion in NMP aus Beispiel 4a zugegeben. Die erhaltene Mischung wird auf phosphatierte Stahlkörper (100Cr6) aufgespritzt und für 120min bei 150°C, danach für 30min bei 220°C eingebrannt.

### Vergleichsbeispiel 5b:

Lackformulierung mit Nanopartikeln ohne blockierte reaktiven Gruppen und Applikation :

Analog zu Beispiel 5a werden 28,5 g der Partikeldispersion in NMP aus Beispiel 4b eingearbeitet und der Lack aufgespritzt.

### Vergleichsbeispiel 6:

Lack ohne Nanopartikel Zu 100g Molykote® 7409 der Firma Dow-Corning werden 22,8g 1-Methyl-2-pyrrolidon zugegeben. Die erhaltene Mischung wird auf phosphatierte Stahlkörper (100Cr6) aufgespritzt und für 120min bei 150°C, danach für 30 min bei 220°C eingebrannt.

### Testung:

Die Stahlkörper aus den Beispielen 5a, 5b und 6 werden einem Verschleißtest nach DIN 51834-8 unterzogen (Linienkontakt, Normalkraft 20N).

**Ergebnisse:**

| Probe | Beispiel 5a | Beispiel 5b | Beispiel 6 |
|---|---|---|---|
| Verschleißtiefe [µm] abgerieben | 2,2 | Abbruch nach 18 min da Schicht abgerieben | 6,9 |

Hierbei zeigt der Probenkörper aus Beispiel 5a gegenüber dem Vergleichsbeispiel 6 einen um 68% geringeren Verschleiß. Daraus resultiert eine entsprechend längere Lebensdauer der Beschichtung.

Beispiel 5b belegt, dass die Partikel, ohne die reversibel blockierten Isocyanatgruppen nicht in die Matrix des Lacksystems eingebunden werden und deshalb abrasiv wirken und der Lack weniger lange beständig ist als ohne Partikel.

## Patentansprüche

1. Reversibel blockierte Isocyanatgruppen aufweisende Metalloxidpartikel in Dispersion, erhältlich durch Reaktion einer Dispersion der Metalloxidpartikel mit
Silanen der Formel 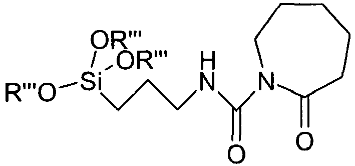 wobei
• R'" jeweils unabhängig voneinander eine lineare oder verzweigte Alkylgruppe mit 1-8 C-Atomen bedeutet.

2. Partikel gemäß Anspruch 1, **dadurch gekennzeichnet, dass** die Metalloxidpartikel aus Oxiden bzw. Hydroxiden von Silicium, Titan, Zink, Aluminium, Cer, Cobalt, Chrom, Nickel, Eisen, Yttrium und/oder Zirkonium besteht, die optional mit Oxiden bzw. Hydroxiden von Silicium oder Aluminium beschichtet sein können.

3. Partikel gemäß Anspruch 1 oder 2, **dadurch gekennzeichnet, dass** zusätzlich zu den Silanen des Anspruchs 1 amphiphile Silane zur Oberflächenfunktionalisierung verwendet werden.

4. Isolierte Partikel gemäß einem oder mehreren des Ansprüche 1 bis 3, **dadurch gekennzeichnet, dass** das Lösungsmittel der Dispersion zur Trocknung entfernt wird.

5. Verfahren zur Herstellung von Metalloxidpartikeln mit reversibel blockierten Isocyanatgruppen in Dispersion nach Anspruch 1, durch Reaktion einer Dispersion der Metalloxidpartikel mit Silanen der Formel 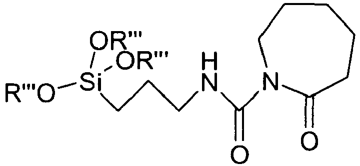 wobei
R'" jeweils unabhängig voneinander eine lineare oder verzweigte Alkylgruppe mit 1-8 C-Atomen bedeutet.

6. Verfahren nach Anspruch 5, **dadurch gekennzeichnet, dass** eine alkoholische oder eine wässrige Dispersion der Metalloxidpartikel eingesetzt wird.

7. Verfahren zur Herstellung von Partikeln gemäß Anspruch 3, **dadurch gekennzeichnet, dass** nachfolgend zu dem Verfahren gemäß Anspruch 5 oder 6 mit einem amphiphilen Silan umgesetzt wird.

8. Verfahren zur Herstellung von Partikeln gemäß Anspruch 4, **dadurch gekennzeichnet, dass** nachfolgend zu dem Verfahren gemäß einem der Ansprüche 5 bis 7 das Lösungsmittel der Dispersion zur Trocknung entfernt wird.

9. Zusammensetzungen enthaltend Partikel nach einem oder mehreren der Ansprüche 1 bis 4 und mindestens eine polymere Verbindung als Matrix.

10. Zusammensetzung nach Anspruch 9, **dadurch gekennzeichnet, dass** die polymere Verbindung der Matrix ein Polyamid, ein Polyamidimid oder ein Epoxid ist.

11. Zusammensetzung gemäß Anspruch 9 oder 10, **dadurch gekennzeichnet, dass** sie zusätzlich Festschmierstoffe enthält.

12. Verwendung der Partikel gemäß einem oder mehreren der Ansprüche 1 bis 4 in einem Lack oder Harz.

13. Verwendung der Zusammensetzung gemäß Anspruch 10 oder 11 in Gleitpaaren

14. Verwendung gemäß Anspruch 13, **dadurch gekennzeichnet, dass** bei den Gleitpaaren mindestens eine der Oberflächen metallisch ist.

15. Verwendung gemäß Anspruch 13 oder 14, **dadurch gekennzeichnet, dass** die Gleitpaare als Ausführungsform Gleitlager, Wälzlager, Kugellager, Gliederketten oder Getriebezahnräder sind.

16. Lack, Harz oder Gleitpaare enthaltend Partikel gemäß einem oder mehreren der Ansprüche 1 bis 4.

## Claims

1. Metal-oxide particles containing reversibly blocked isocyanate groups in dispersion, obtainable by reaction of a dispersion of the metal-oxide particles with
silanes of the formula 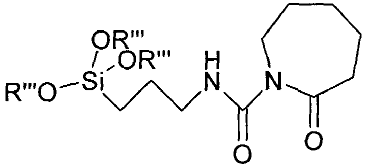 where
• R'" in each case, independently of one another, denotes a linear or branched alkyl group having 1-8 C atoms.

2. Particles according to Claim 1, **characterised in that** the metal-oxide particles consist of oxides or hydroxides of silicon, titanium, zinc, aluminium, cerium, cobalt, chromium, nickel, iron, yttrium and/or zirconium, which may optionally be coated with oxides or hydroxides of silicon or aluminium.

3. Particles according to Claim 1 or 2, **characterised in that**, in addition to the silanes of Claim 1, amphiphilic silanes are used for the surface functionalisation.

4. Isolated particles according to one or more of Claims 1 to 3, **characterised in that** the solvent is removed from the dispersion for drying.

5. Process for the production of metal-oxide particles containing reversibly blocked isocyanate groups in dispersion according to Claim 1, by reaction of a dispersion of the metal-oxide particles with silanes of the formula 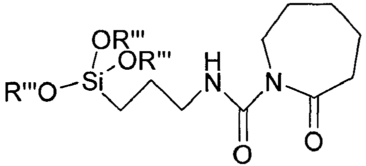 where
R'" in each case, independently of one another, denotes a linear or branched alkyl group having 1-8 C atoms.

6. Process according to Claim 5, **characterised in that** an alcoholic or aqueous dispersion of the metal-oxide particles is employed.

7. Process for the production of particles according to Claim 3, **characterised in that** the process according to Claim 5 or 6 is followed by reaction with an amphiphilic silane.

8. Process for the production of particles according to Claim 4, **characterised in that** the process according to one of Claims 5 to 7 is followed by removal of the solvent from the dispersion for drying.

9. Composition comprising particles according to one or more of Claims 1 to 4 and at least one polymeric compound as matrix.

10. Composition according to Claim 9, **characterised in that** the polymeric compound of the matrix is a polyamide, a polyamide-imide or an epoxide.

11. Composition according to Claim 9 or 10, **characterised in that** it additionally comprises solid lubricants.

12. Use of the particles according to one or more of Claims 1 to 4 in a surface coating or resin.

13. Use of the composition according to Claim 10 or 11 in sliding pairs.

14. Use according to Claim 13, **characterised in that** at least one of the surfaces of the sliding pairs is metallic.

15. Use according to Claim 13 or 14, **characterised in that** the sliding pairs are in the form of sliding bearings, roller bearings, ball bearings, link chains or gearbox gearwheels.

16. Surface coating, resin or sliding pair comprising particles according to one or more of Claims 1 to 4.

## Revendications

1. Particules d'oxyde métallique contenant des groupes isocyanate bloqués réversiblement en dispersion, pouvant être obtenues par réaction d'une dispersion des particules d'oxyde métallique avec des silanes de la formule : 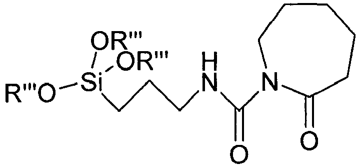 dans laquelle :
• R'" représente, dans chaque cas, indépendamment les uns des autres, un groupe alkyle linéaire ou ramifié comportant 1-8 atome(s) de C.

2. Particules selon la revendication 1, **caractérisées en ce que** les particules d'oxyde métallique sont constituées par des oxydes ou des hydroxydes de silicium, de titane, de zinc, d'aluminium, de cérium, de cobalt, de chrome, de nickel, de fer, d'yttrium et/ou de zirconium, lesquelles particules peuvent en option être revêtues d'oxydes ou d'hydroxydes de silicium ou d'aluminium.

3. Particules selon la revendication 1 ou 2, **caractérisées en ce que**, en plus des silanes de la revendication 1, des silanes amphiphiles sont utilisés pour la fonctionnalisation de surface.

4. Particules isolées selon une ou plusieurs des revendications 1 à 3, **caractérisées en ce que** le solvant est enlevé de la dispersion pour séchage.

5. Procédé pour la production de particules d'oxyde métallique contenant des groupes isocyanate bloqués réversiblement en dispersion selon la revendication 1, par réaction d'une dispersion des particules d'oxyde métallique avec
des silanes de la formule : 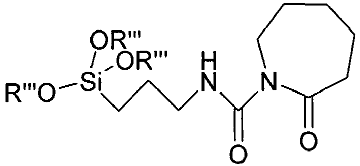 dans laquelle :
R'" représente, dans chaque cas, indépendamment les uns des autres, un groupe alkyle linéaire ou ramifié comportant 1-8 atome(s) de C.

6. Procédé selon la revendication 5, **caractérisé en ce qu'**une dispersion alcoolique ou aqueuse des particules d'oxyde métallique est utilisée.

7. Procédé pour la production de particules selon la revendication 3, **caractérisé en ce que** le procédé selon la revendication 5 ou 6 est suivi par une réaction avec un silane amphiphilique.

8. Procédé pour la production de particules selon la revendication 4, **caractérisé en ce que** le procédé selon l'une des revendications 5 à 7 est suivi par l'enlèvement du solvant de la dispersion pour séchage.

9. Composition comprenant des particules selon une ou plusieurs des revendications 1 à 4 et au moins un composé polymérique en tant que matrice.

10. Composition selon la revendication 9, **caractérisée en ce que** le composé polymérique de la matrice est un polyamide, un polyamide-imide ou un époxyde.

11. Composition selon la revendication 9 ou 10, **caractérisée en ce qu'**elle comprend de façon additionnelle des lubrifiants solides.

12. Utilisation des particules selon une ou plusieurs des revendications 1 à 4 dans un revêtement de surface ou une résine.

13. Utilisation de la composition selon la revendication 10 ou 11 dans des paires coulissantes.

14. Utilisation selon la revendication 13, caractérisée en qu'au moins l'une des surfaces des paires coulissantes est métallique.

15. Utilisation selon la revendication 13 ou 14, **caractérisée en ce que** les paires coulissantes sont sous la forme de paliers coulissants, de roulements à rouleaux, de roulements à billes, de chaînes à maillons ou de pignons de boîte de vitesses.

16. Revêtement de surface, résine ou paire coulissante comprenant des particules selon une ou plusieurs des revendications 1 à 4.
